# EUROPEAN PATENT APPLICATION

(11) **EP 2 312 734 A2**
(43) Date of publication of application: **20.04.2011**
(21) Application number: 10005835.3
(22) Date of filing: 07.06.2010
(51) Int. Cl.: H02K 53/00

(54) **Motor to push strength magnetic physics**

(30) Priority: 13.10.2009 EP 09013266
(71) Applicant: Santonicola, Antonio, 81030 Cancello ed Arnone (CE) (IT)
(72) Inventor: Santonicola, Antonio, 81030 Cancello ed Arnone (CE) (IT)

(57) **Abstract**

The device is constituted of element "circular rotatory" and "mechanism of push", both drawees with permanent magnets that positioned in appropriate way on all the elements that compose him/it, stir strengths of push and traction in the moment and to the correct point, these strengths they allow the mechanism of push to automatically provoke a push syncronized to repetition for the element "circular rotatory" that they rotate in continuous way.

The speed and the strength of rotation it depends from the consistence of the permanent magnets and from the consistence of the elements that you/they compose him/it.

## Description

### Premise

According to the information possessed by the undersigned, devices of the kind don't currently exist, otherwise you/they would certainly be exploited, seen the lack of alternative energy to cost zero and the safeguard of the environment. searches have been effected for regulating what they work that exploits the same principles, is ascertained that in quite a lot cases the projects have been abandoned because the parties were mostly assembled to other solutions on the magnetism to develop a device.

The alternative principal energy which reference currently does him is the Solar one, with the wind etc., these energies to be able to be exploited at the most always ask not for natural conditions available besides the fittingses for the use they are very expensive, while the device under described and completely autonomous, it doesn't provoke besides anybody form of pollution its cost it is very contained because of its simplicity, its duration it is very long because magnets have been employed permanent and any element usury subject.

### Description

And known that in physics two strengths of different sign are attracted while of equal sign they are rejected, to realize the found one is had the idea to exploit the principle of the strengths that they are rejected and they are attracted.

The found one and composed of element "circular rotatory" (table I draw n. 1) realized for the demand with material that he doesn't allow to influence from the magnetic flow (aluminum, brass etc.) and "mechanism of push" (table I draw n. 2) also this realized with material that he doesn't allow to influence from the magnetic flow;

on it departs her external of the wheels that compose the element "circular rotatory" I/you/they have been fixed in alternation and in way syncronized among them: of the permanent magnets of strength and characteristics in base to the greatness of the wheels and the specific demands of strength and rotation, a part of these magnets they will serve as receivers of pushed by the mechanism of push subsequently described, while the other part will serve from pilot for the integrated zipper in the mechanism of push, their position has been calculated so that to allow the times of synchronism of the whole mechanism, while the verse and positioned with external pole for everybody of the same sign; the magnets preceded for receiving the push are more consistent as he/she forces in comparison to the magnets he/she pilots this because they will have to receive a consistent push to make to rotate the rotatory circular element while those pilot of low strength they have only relatively the assignment to pilot I unhook him/it to the correct moment of the zippers integrated in the mechanism of push.

The Mechanism of push and mixture from three parts: the first denominated part "anchorage" for the mechanism of push, adaptable to every specific demand also how adjustable, realized in this circumstance with two bars in steel and with holes for the assemblage, so that to be able to be adjustable in base to the demand;
the second part is one "particular zipper" (table I draw n. 3), particular because: its outline is adapted in appropriate way to the demand, the integrated zipper in every mechanism of push is the element that assembled as specified following, it will serve to provoke the push to repetition to make to rotate the element "circular rotatory", such zipper has a rotation of 30 degrees on both the sides, such rotation and allowed by a rotating device climbed on between the same one and the fixed part, on the low part of the wings of the zipper, more or less toward the half, and fixed a half collar that on the side ones of this last, they have fixed of the "magnets permanent" preceded to the push, with characteristics and toward of the poles equal to the magnets receivers of push of the element "circular rotatory", positioned so that to final assemblage is found to appropriate distance and in front of the magnets "receivers of push" positioned on the wheels "of the rotatory circular element" and has the toward external of the same pole. Through the anchorage it will be possible to adequately outdistance them with those of the element "circular rotatory" so that, the same to the realization of the cycle of rotation, don't provoke the braked of the element "circular rotatory" besides, on the other extremities of the wings of the zipper others have fixed "magnets permanent" how in partnership with the magnets he/she pilots climbed on on the wheels of the element "circular rotatory" and those of the fixed part subsequently described serve from control for the various phases that it will go to perform the same zipper and for the regulation of strength and speed of push.

The third part "fixed part" (table I draw n. 4)
what it composes the mechanism of push and immediately fixed behind the zipper, its particular form has been conceived for containing of the you bear filleted in brass that you/they serve to regulate the correct position of as many "magnets permanent" climbed on on the same, the correct position regulates the strength of push of the zipper and particularly the sensibility of I unhook, such sensibility is important in how much I unhook him/it you/he/she is determined in alternation by the "magnets he/she pilots" sets "on the rotatory circular element". In phase of rotation such sensibility reduces at the most the partial braked of the element "circular rotatory" even if compensated by a greater push determined by the most greater number of magnets of push and receivers of push; this last detail with the aid of all the shrewdness and the elements that compose him/it and the combination of the strengths that they are attracted and they reject they form: an automatic mechanism of push that provokes: I unhook him/it the rotation, the push and the rearmament of the zipper. Such mechanism has the essential assignment to push with violence and alternation in the moment and to the correct point the extremities of the zipper where the have fixed "magnets permanent" of push, approaching them when enough to the magnets "receivers of push" that they are found in position on the element "circular rotatory" in movement. This operation determines the push, cause of the opposition of the poles of the same sign, to surrender they will be therefore, the mobile parts: and that is: the element "circular rotatory" and the wing of the zipper that the push has provoked that will do her/it immediately reenter so that not to hinder with the flow of the magnets of push, the run in action of the element "circular rotatory", and to syncronize him to immediately be ready for the following cycle.

First start of the device:
To manually arm the zippers approaching the superior extremities to the perimeter of the wheels, to make to manually rotate the rotatory circular element, so that: the "magnets he/she pilots" sets on the perimeter of the preceded wheels they draw near to the magnets "receiver pilots" sets on the extremities superior of the zippers and because of the opposition of the poles of the same sign they provoke I unhook him/it violent of the zipper in state of under pressure because of the magnets preceded to this assignment on the fixed part, bringing accordingly in before the other extremity of the zipper and that is that of the "magnets of push", these last ones find in position the magnets "receivers of push" sets on the wheel preceded to receive the push and always because of the opposition of the poles of the same sign, a strength of push produces him for the mobile elements and that is: the element "circular rotatory" that it will do him/it rotate and for the extremity of the zipper that will do her/it reenter and to be ready for the following automatic cycle.

### Conclusions:

This description is reported to a device of small dimensions and little surrender, in fact as device is illustrated to two times, for devices without limits of surrender and consistence they will increase therefore, the "times" understood as elements to fall and all the described parts understood the permanent magnets will have dimensions, characteristics and distance of positioning of the magnets adjusted to the demand.

Found man can be employed for varied uses and particularly as "motor to push strength magnetic physics" and therefore, to move rotors of dynamo, alternators, pomps, utensils etc. to have energy to cost zero.

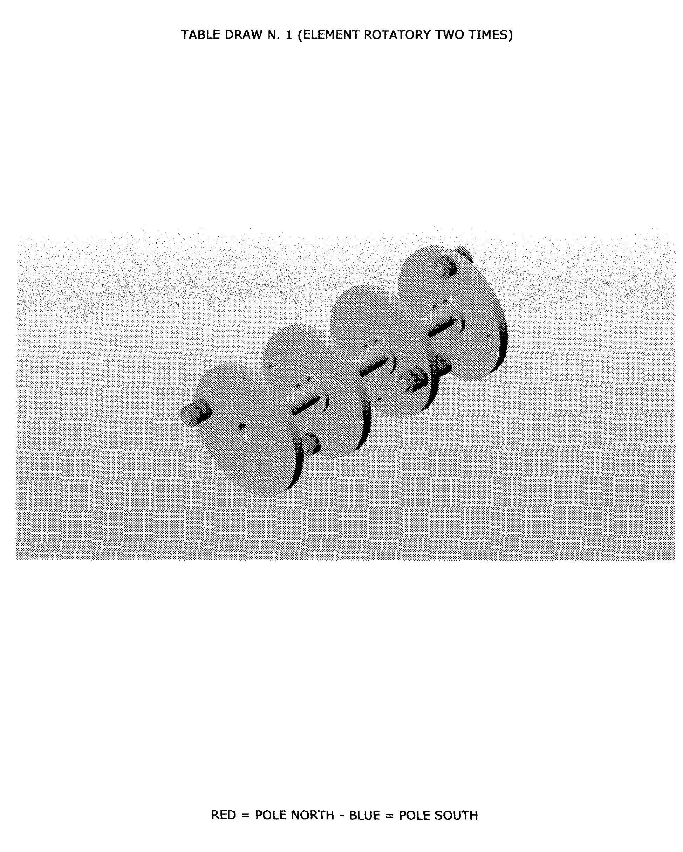

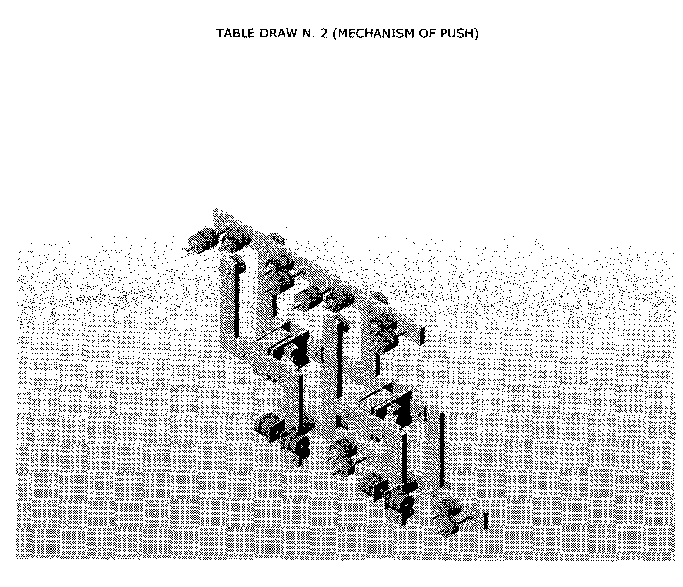

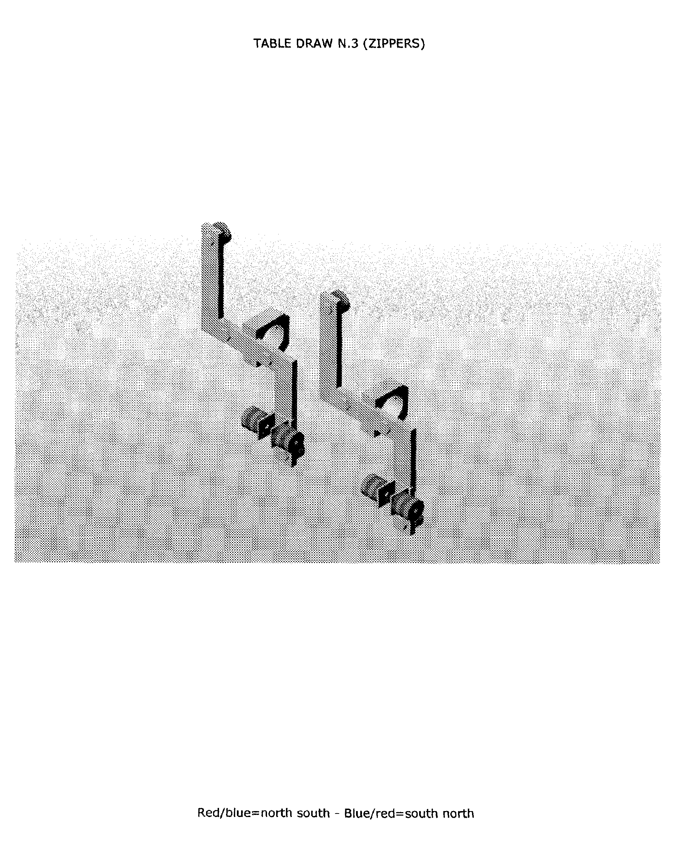

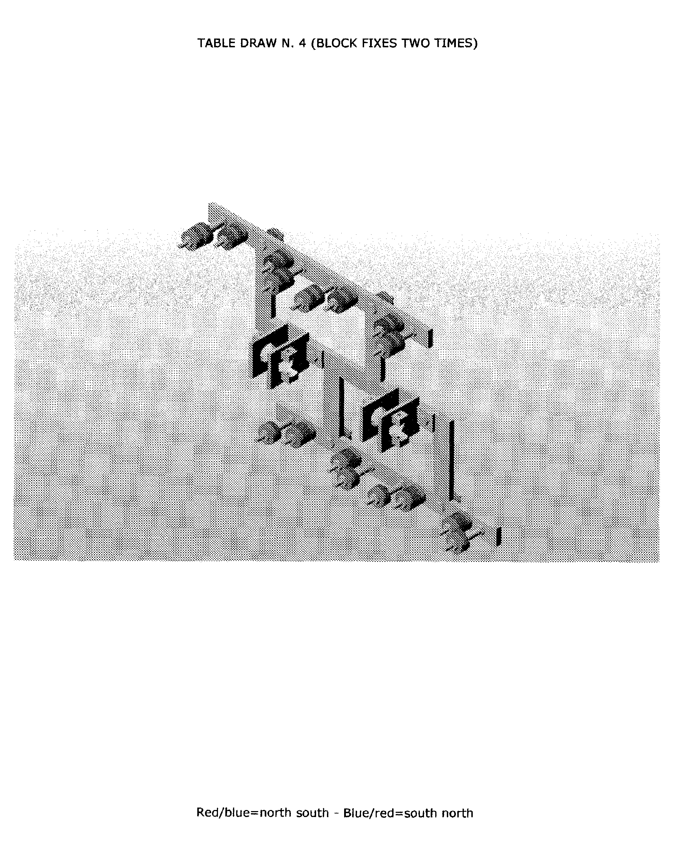

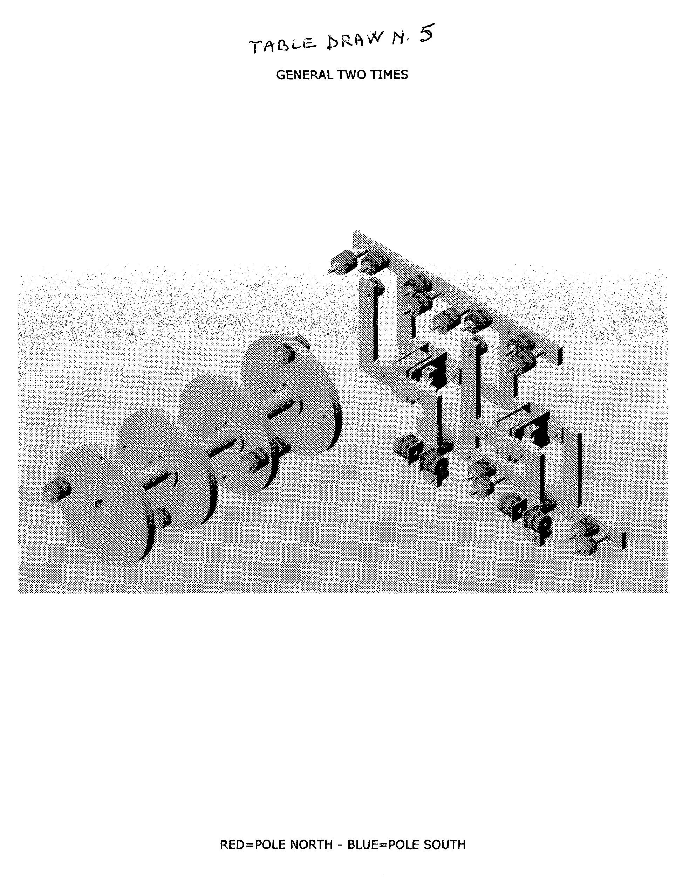

## Claims

1. rotatory circular element of any dimension and form realized more with the whole wheels to falls and you outdistance among them on only axle of diamagnetic material and you provide of magnets permanent of any form, dimension and strength, positioned with the verse of both the poles in proximity of the external perimeter and in any other part of the same wheel and prepared in way syncronized between them and employed as he/she pilots for I unhook him/it of a mechanism of push and from receiver of pushed by a mechanism of push;

2. fixed part of push realized in material diamagnetic and conceived as described, of any form or greatness provided of magnets permanent of any form, greatness and strength, prepared in adjustable way with position of the poles in different way and used for the strength of push and control zipper, also with different disposition on the elements of assemblage;

3. zipper of any form or greatness assembled as also described with different disposition, strength and greatness of the magnets of push, control and magnet or other element receiver he/she pilots from rotatory element;

4. the whole whole of any greatness, even if otherwise assembled with one or more elements to fall positioned on the axle of rotation.
